# EUROPEAN PATENT APPLICATION

(11) **EP 4 730 834 A1**
(43) Date of publication of application: **22.04.2026**
(21) Application number: 24207331.0
(22) Date of filing: 17.10.2024
(51) Int. Cl.: H04Q 11/00

(54) **PASSIVE OPTICAL NETWORKS**

(71) Applicant: Nokia Solutions and Networks Oy, 02610 Espoo (FI)
(72) Inventor: VERPLAETSE, Michiel, 9810 Nazareth (BE); SPRUYT, Paul, 3001 Leuven (BE); DAEMS, Jef, 2140 Borgerhout (BE)
(74) Representative: Sayer, Robert David

(57) **Abstract**

Examples embodiments relate to passive optical networks (PONs) and in particular to a controller and associated method for an optical termination device. The controller may for example comprise means for determining, based on one or more inputs, at least one of first and second passive optical network, PON, technologies to use for transmitting and/or receiving data at a time instance between an optical line terminal, OLT, and at least one optical network unit, ONU, over an optical distribution network, ODN. the OLT and the at least one ONU may be configured to support the first and second PON technologies. The controller may also comprise means for causing the data to be transmitted and/or received at the time.

## Description

### Field

Examples embodiments relate to passive optical networks (PONs).

### Background

Passive optical network (PONs) may comprise a network element, which may be referred to as an optical line terminal (OLT), connected to one or a plurality of optical network units (ONUs) via an optical distribution network (ODN) which may comprise optical fibres and one or more optical splitters.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides a controller for an optical termination device, the controller, comprising: means for determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and means for causing the data to be transmitted and/or received at the time instance using the determined at least one PON technology.

In some example embodiments, the determined at least one PON technology comprises only one of the first and second PON technologies at the time instance.

In some example embodiments, the optical termination device comprises first and second PON sub-systems respectively associated with the first and second PON technologies, and causing the data to be transmitted and/or received comprises causing the data to be transmitted and/or received by the first and/or second PON sub-system associated with the determined at least one PON technology at the time instance.

In some example embodiments, the controller may further comprise: means for changing a state of the first or second PON sub-system associated with the determined at least one PON technology from a disabled state to an enabled state at, or prior to, the time instance.

In some example embodiments, the controller may further comprise: means for changing a state of the first or second PON sub-system, which is other than that associated with the determined at least one PON technology, from an enabled state to a disabled state. In some example embodiments, this change of state may be performed (although not necessarily) subsequent to changing the state of the first or second PON sub-system associated with the determined at least one PON technology from the disabled state to the enabled state. In this way, some time is allowed for the first or second PON sub-system associated with the determined at least one PON technology to become enabled. Alternatively, this change of state may be performed prior to changing the state of the first or second PON sub-system associated with the determined at least one PON technology from the disabled state to the enabled state. In this way, data may be flushed from the to-be disabled first or second PON sub-system prior to the enabling of the other.

In some example embodiments, the controller may further comprise: means for powering down the sub-system having the disabled state or at least part of said sub-system having the disabled state.

In some example embodiments, the controller may further comprise: means for transmitting a first control signal to the OLT and/or the at least one ONU for causing the data to be received and/or transmitted by the at least first or second sub-system associated with the determined at least one PON technology at the time instance.

In some example embodiments, the controller may further comprise: means for receiving a first input signal from the OLT or the at least one ONU indicating a state or change of state of the first or second PON sub-system.

In some example embodiments, the one or more inputs may comprise at least an indication of: a traffic load associated with data to be transmitted to and/or received from the at least one ONU; a traffic load associated with data to be transmitted by the OLT at the time instance; a traffic load associated with data to be received by the OLT at the time instance; an average traffic load associated with data that has been transmitted by the OLT prior to the time instance; or an average traffic load associated with data that has been received by the OLT prior to the time instance.

In some example embodiments, the one or more inputs may be received using a currently-enabled PON technology. For example, the one or more inputs may be received prior to the time instance. For example, the one or more inputs may comprise, at least in part, an indication of determined PON technology.

In some example embodiments, the determined at least one PON technology is determined over a time period, including said time instance, based at least in part, on a selected mode of operation. The selected mode of operation may be used by the OLT and the at least one ONU over the time period. In some example embodiments, different selected modes of operation are used by the OLT and the at least one ONU over the time period. In some example embodiments, the selected mode of operation is used for upstream and downstream communications between the OLT and the at least one ONU over the time period. In some example embodiments, different selected modes of operation are used for upstream and downstream communications between the OLT and the at least on ONU over the time period. In some example embodiments, the modes of operation may comprise at least one of: a first mode, wherein the determined at least one PON technology alternates between the first and second PON technologies over the time period; a second mode, wherein the determined at least one PON technology comprises only the first PON technology over a plurality of spaced-apart time instances of the time period and comprises the first and second PON technologies over a different plurality of spaced-apart time instances of the time period; a third mode, wherein the determined at least one PON technology comprises only the second PON technology over a plurality of spaced-apart time instances of the time period and comprises the first and second PON technologies over a different plurality of spaced-apart time instances of the time period; a fourth mode, wherein the determined at least one PON technology comprises the first and second PON technologies over the time period; a fifth mode, wherein the determined at least one PON technology comprises only the first PON technology over the time period; or a sixth mode, wherein the determined at least one PON technology comprises only the second PON technology over the time period.

In some example embodiments, the first and second PON technologies may be respectively associated with transmitting and/or receiving data at relatively lower and higher peak traffic loads.

In some example embodiments, the determined at least one PON technology may comprise: the first PON technology if the indicated traffic load is below a threshold; or the second PON technology if the indicated data rate is at or above the threshold.

In some example embodiments, the one or more inputs may comprise an indication of a traffic load associated with data to be transmitted to and/or received from the at least one ONU. In some example embodiments, the indication of the traffic load may be based on at least one of: a latency requirement of data to be transmitted to and/or received from the at least one ONU; a congestion status associated with the ODN; or a fault status associated with the ODN.

In some example embodiments, the one or more inputs may comprise, at least in part, an indication that data to be transmitted to and/or received from the at least one ONU comprises first and second data traffic streams, and wherein the determining means may determine to use, at the time instance: the first PON technology for transmitting and/or receiving the first data traffic stream, and the second PON technology for transmitting and/or receiving the second data traffic stream. In some example embodiments, the determining means may determine to use, at the time instance: the second PON technology for transmitting and/or receiving the second data stream in response to the one or more inputs indicating that the second data stream has a relatively lower latency requirement than the first data stream.

In some example embodiments, the one or more inputs may comprise an indication of a power supply condition for the OLT and/or the at least one ONU.

In some example embodiments, the controller may be comprised in at least one of: the OLT; the at least one ONU; or a device in communication with the OLT and/or the at least one ONU, for example an external controller which may be in the cloud.

A second aspect provides a method for controlling an optical termination device, the method comprising: determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and causing the data to be transmitted and/or received at the time instance using the determined at least one PON technology.

The second aspect may also comprise any feature described in relation to the first aspect.

A third aspect provides a computer program comprising a set of instructions which, when executed on an apparatus, is configured to cause the apparatus to carry out a method comprising: determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and causing the data to be transmitted and/or received at the time instance using the determined at least one PON technology.

The third aspect may also comprise any feature described in relation to the first aspect.

A fourth aspect provides a non-transitory computer-readable medium having stored thereon computer-readable code, which, when executed by at least one processor, causes the at least one processor to perform a method, comprising: determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and causing the data to be transmitted and/or received at the time instance using the determined at least one PON technology.

The fourth aspect may also comprise any feature described in relation to the first aspect.

A fifth aspect provides an apparatus, the apparatus having at least one processor and at least one memory having computer-readable code stored thereon which when executed controls the at least one processor to: determine, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and cause the data to be transmitted and/or received at the time instance using the determined at least one PON technology.

The fifth aspect may also comprise any feature described in relation to the first aspect.

A sixth aspect provides an optical line terminal, OLT, configured to perform a method as described in relation to the second aspect.

A seventh aspect provides an optical network unit, ONU, configured to perform a method as described in relation to the second aspect.

An eighth aspect provides a system, comprising an optical line terminal, OLT, and at least one optical network unit, ONU, wherein the OLT and the at least one ONU communicate via an optical distribution network, ODN, and wherein at least one of the OLT and the at least one ONU is configured to perform the method described in relation to a second aspect.

### Brief Description of the Drawings

The invention will now be described, by way of non-limiting example, with reference to the accompanying drawings, in which:
FIG. 1 illustrates an example passive optical network (PON);
FIG. 2 illustrates an example PON according to one or more example embodiments;
FIG. 3 illustrates in more detail an optical line terminal (OLT) and at least one optical network unit (ONU) of the FIG. 2 PON according to one or more example embodiments;
FIG. 4 is a flow diagram indicating operations according to one or more example embodiments;
FIG. 5 illustrates respective timing diagrams associated with different modes of operation according to one or more example embodiments;
FIG. 6 illustrates an example timing diagram for a particular mode of operation according to one or more example embodiments;
FIG. 7 illustrates another example timing diagram for a particular mode of operation according to one or more example embodiments;
FIG. 8 illustrates an apparatus according to one or more example embodiments; and
FIG. 9 illustrates a non-transitory computer-readable medium for storing computer-readable instructions for causing the FIG. 9 apparatus to operate in accordance with some example embodiments.

### Detailed Description

Example embodiments relate to passive optical networks (PONs).

Some example embodiments relate to a controller for an optical termination device, for example a controller for an optical line terminal (OLT) of a PON and/or for at least one optical network unit (ONU) of the PON, wherein the OLT and the at least one ONU communicate over an optical distribution network (ODN). PON technology is a type of fibre-optic telecommunications technology designed to deliver broadband network access to end-users. It operates on a point-to-multipoint ODN, utilizing one or more optical splitters/combiners to distribute an optical signal from a network node, known as an optical line terminal (OLT), to multiple user end points, referred to as optical network units (ONUs) or optical network terminals (ONTs).

As described herein, an OLT may refer to a network element in an ODN-based optical access network that terminates the root of at least one ODN. An ODN may be defined as a point-to-multipoint fibre infrastructure that contains one or more optical splitters/combiners. ODNs are typically passive but may contain one or more active components, such as one or more active reach extenders. The network element may comprise one or a plurality of ports. A port terminates the root of an ODN. Two or more PON technologies (or PON protocols) may be combined on the same ODN by using a coexistence element. A coexistence element is a bi-directional functional element used to connect PON systems defined in different standard recommendations to the same ODN. A coexistence element may be external of the OLT, sometimes referred to as an external coexistence element, or integrated in the OLT, e.g., making use of a multi-PON module (MPM) that integrates two or more PON OLT transceivers and a WDM function (see for example ITU G.9804.1, section 7.3).

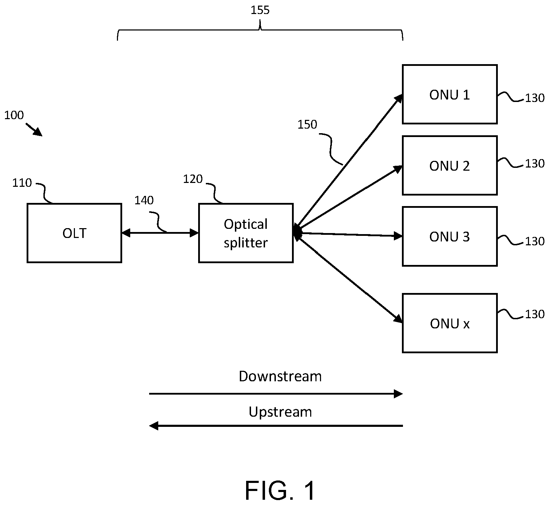

FIG. 1 illustrates an example PON 100. The PON 100 may comprise at least three distinct types of devices, namely an OLT 110, at least one ONU 130 and one or more optical splitters 120. Other terminology may sometimes be used for the same or equivalent devices.

For example, the OLT 110 may comprise a network element as described above. Or the OLT may comprise multiple network elements, terminating different PON technologies.

The OLT 110 may be connected to the optical splitter 120 by one or more optical fibres 140 and the optical splitter may be connected to the plurality of ONUs 130 by respective optical fibres 150. In some examples, there may be a plurality of optical splitters 120, for example a cascade or hierarchical arrangement of optical splitters. The optical fibres 140 are sometimes referred to as feeder fibres and the optical fibres 150 are sometimes referred to as distribution fibres. The optical fibres 140, 150 and the optical splitter may comprise at least part of an ODN 155, which is the means by which optical signals are distributed between the OLT 110 and the plurality of ONUs 130.

The communicating of data from the OLT 110 to one or more of the plurality of ONUs 130 may be referred to as downstream communications (or communication in the downstream direction) and the communicating of data from one or more of the plurality of ONUs to the OLT 110 may be referred to as upstream communication (or communication in the upstream direction). The ONUs 130 may communicate their data in the upstream direction using burst-mode signals, meaning signals transmitted in relatively short bursts, wherein one ONU may transmit its bursts at times that may not overlap with bursts transmitted by the other ONUs. This is known as Time Division Multiple Access (TDMA). Alternatively, wavelength-division multiplexing (WDM) may be used.

The optical splitter 120 is configured to split and/or combine signals. For example, the optical splitter 120 may split optical signals received from the optical fibre 140 for downstream communications and may combine optical signals received from the optical fibres 150 for upstream communications. For so-called fibre-to-the-home (FTTH) PON networks, the OLT 110 may be located at a service provider's central office or at a remote location and may be considered a network side device. The OLT 110 serves as the point of origination for downstream transmissions coming from, and as the point of destination for upstream transmissions going to, the service provider's network. The OLT 110 performs conversion between electrical signals and optical signals. The optical splitter 120 is used to split downstream optical signals into several parts at a certain ratio and to combine upstream optical signals. The ratio is typically, but not necessarily, symmetric, e.g., a 1:2, 1:4 or 1:8 split with equal power on each of the two, four or eight branches. Asymmetric splitters or hierarchical structures of splitters may also be used. The ONUs 130 are typically associated with different users and in that sense may be considered user or subscriber end devices. The term ONU is used herein for ease of explanation to refer to a device that terminates one leaf of the ODN. It should be understood that the ONU is called an optical network terminal (ONT) in some telecommunication standards and that the terms ONU and ONT may be used interchangeably in all example embodiments. The respective ONUs 130 terminate the optical signals transmitted via the fibre in the downstream direction. For upstream communications, the ONUs 130 are the origin and the OLT 110 is the destination.

Advantages of PON technology include very high bit rates and long reach thanks to usage of fibre as transmission medium, but also low power consumption and low cost as one OLT port and feeder fibre can serve many users.

In this context, a PON technology may be defined as a telecommunications technology or protocol for delivering data over passive point-to-multipoint optical fibre. Alternative terms such as PON protocol may be used in place of PON technology. Several examples of standardized PON technologies are described below.

Many PON technologies are time-division multiplexing (TDM) technologies in which the fibre medium is shared in time between respective ONUs. Examples include so-called GPON, E-PON, XGS-PON and 25GS-PON. Time- and wavelength-division multiplexing (TWDM) technologies also exist, such as NG-PON2.

There has, and will be, a push to scale towards higher data rates and longer reaches, as reflected in various standardized PON technologies. This has been, and will be, accompanied by an increase in power consumption which presents an issue.

For example, so-called 50G-PON or Higher speed PON (HSPON or HSP) technology aims to offer a bit rate or bandwidth of up to 50 Gbps yet requires optical amplification, linear reception and digital signal processing to meet required link budgets at an increased data rate compared to earlier PON technologies. Work is ongoing in the ITU-T to define Very high-speed PON (VHSPON or VHSP) with achievable rates of 100 Gbps and more. 50G-PON technology, and other future forms of PON technology, are therefore expected to consume significantly more power than earlier PON technologies.

Example embodiments may avoid or alleviate such issues and may allow scalability of power consumption at the OLT and/or ONU ends of an ODN without adversely affecting peak performance of the PON technologies used, particularly newer PON technologies that are capable of using higher peak data rates, whilst also providing a reliable communications network. Example PON technologies include, but are not limited to, GPON, XGS-PON, 25GS-PON, 50G-PON as well as other future PON technologies, including multichannel and/or coherent PON technologies.

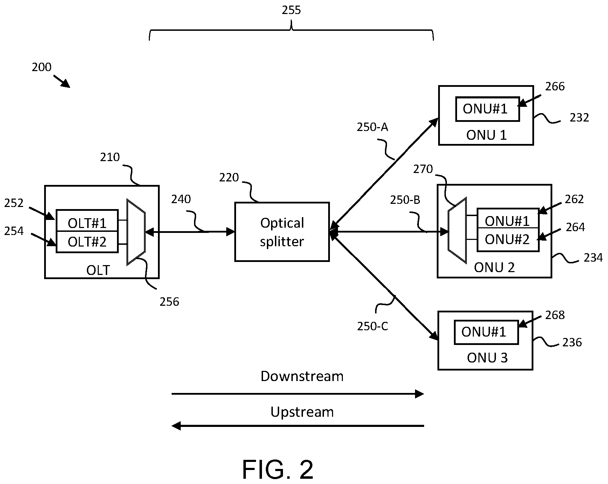

FIG. 2 illustrates an example PON 200 useful for understanding example embodiments.

Similar to the FIG. 1 PON 100, the PON 200 may comprise an OLT 210, being a network element having the above definition, one, or a plurality of ONUs 232, 234, 236 and one or more optical splitters 220. The OLT 210 may be connected to the optical splitter 220 by one or more optical fibres 240 and the optical splitter may be connected to the plurality of ONUs 232, 234, 236 by respective optical fibres 250-A - 250-C. The optical fibres 240, 250 and the optical splitter 220 may comprise at least part of an ODN 255, which is the means by which optical signals are distributed between the OLT 210 and the plurality of ONUs 232, 234, 236.

According to some example embodiments, the OLT 210 may support communications via the ODN 255 using at least first and second PON technologies.

The first and second PON technologies may comprise the same or different PON technologies.

The first and second PON technologies may have the same or different performance and characteristics; for example, the second PON technology may enable communications using higher peak data rates than the first PON technology and, may have higher power consumption than the first PON technology.

Additional or alternative differentiators between the first and second PON technologies may include, by way of example, latency, jitter and robustness to noise and/or network faults.

For example, the first PON technology may comprise GPON, as an example of a legacy PON technology, and the second PON technology may comprise 50G-PON. Alternative combinations may be used to cater for other and/or future PON technologies.

In some example embodiments, the OLT 210 may be configured to support communications using three or more PON technologies, wherein the concepts described herein may be extended accordingly.

The OLT 210 supporting first and second PON technologies may comprise first and second OLT PON sub-systems 252, 254 which are respectively associated with the first and second PON technologies. For ease of explanation, some example embodiments may assume that the first and second PON technologies are GPON and 50G-PON respectively.

The first OLT PON sub-system 252 is labelled OLT#1 and the second OLT PON sub-system 254 is labelled OLT#2 to indicate which PON technology the respective first and second OLT PON sub-systems support.

The first and second OLT PON sub-systems 252, 254 may, for example, be connected to the same ODN 255 by means of a coexistence element, that can be internal or external of the OLT 210 as described briefly above. In case an external coexistence element is used, the ports respectively associated with the first and second OLT PON sub-systems 252, 254 may be different ports on the same line card, or belong to different line cards of the same OLT network element 210, or belong to different OLT network elements.

At least one of the first to third ONUs 232, 234, 236 may also support the first and second (and potentially other) PON technologies.

In FIG. 2, the first and third ONUs 232, 236 may support only the first PON technology, namely GPON in this example. The second ONU 234 supports the first and second PON technologies, namely GPON and 50G-PON in this example. In other embodiments, two or more ONUs may support the first and second PON technologies.

In some example embodiments, which PON technology or technologies the second ONU 234 may operate in accordance with may change over time. For example, the second ONU 234 may come to operate in accordance with the second PON technology at a subsequent time.

The first and third ONUs 232, 236 may each comprise a first ONU sub-system 266, 268 associated with (e.g., supporting) the first PON technology, and hence are labelled as ONU#1.

The second ONU 234 may comprise first and second ONU PON sub-systems 262, 264 associated with (e.g., supporting) the first and second PON technologies respectively, and hence are labelled ONU#1 and ONU#2.

The first and second ONU PON sub-systems 262, 264 may comprise respective transceivers or similar unit.

The first and second ONU PON sub-systems 262, 264 may be connected to a coexistence element 270 for combining/splitting optical signals from/to said first and second ONU PON sub-systems. The coexistence element 270 may be external of the ONU, or integrated in it (e.g. making use of an MPM).

It will be seen that each of the first to third ONUs 232, 234, 236 support a base PON technology, namely GPON and the second ONU 234 further supports 50G-PON. The second ONU 234 may be termed a dual-PON ONU. Other combinations may be used, for example the first and/or the third ONUs 232, 236 may support only 50G-PON. The illustrated example is not to be considered limiting.

Example embodiments may involve determining, for example by a controller for an optical termination device, at least one of the first and second PON technologies to use for transmitting and/or receiving data at one or more time instances. This may be performed in such a way as to improve performance, for example by exploiting different known characteristics of the first and second PON technologies. Improved performance may result from at least one of: increased throughput, reduced power consumption, reduced latency, reduced jitter or increased robustness. This list is not intended to be limiting.

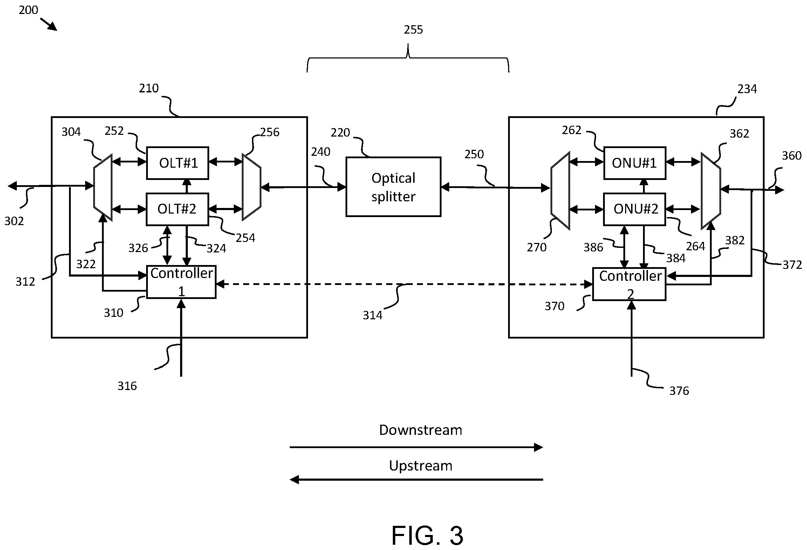

FIG. 3 illustrates in more detail some components of the OLT 210 and the second ONU 234 in accordance with some example embodiments. The first and third ONUs 232, 236 are not shown for ease of explanation.

The OLT 210 may comprise the first and second OLT PON sub-systems 252, 254 respectively associated with the first and second PON technologies.

The OLT 210 may also comprise the coexistence element 256.

An input multiplexer / demultiplexer 304 may be connected at one side to a signal line 302, which carries data traffic (transmitted and/or received) and at the other side to the first and second OLT PON sub-systems 252, 254.

The OLT 210 may also comprise a first controller 310. The controller 310 may comprise hardware, software, firmware or a combination thereof. The first controller 310 may receive one or more inputs.

For example, the first controller 310 may receive at least a first input, indicative of data traffic, via a first signal line 312.

Additionally, or alternatively, the first controller 310 may receive at least a second input from a second controller 370 of the second ONU 234 via a second signal line 314.

The second signal line 314 is not necessarily a dedicated signal line but may indicate an exchange of control data which may take place over the ODN 255 in one or both directions using a currently-active PON technology.

Additionally, or alternatively, the first controller 310 may receive at least a third input from an external source via a third signal line 316. Additionally, or alternatively, the first controller 310 may receive a fourth and fifth input via fourth and fifth signal lines 324, 326. For example, the fourth and/or fifth inputs may indicate one or more faults, such as may be indicated by performance counters, status indicators, etc.

In response to the one or more inputs, the first controller 310 may perform operations to be described below. Note that these operations are ONU-specific, that is they relate to operations relating to the second ONU 234. It should however be appreciated that other operations may be used for other ONUs such as the first and third ONUs 232, 236 and these may change over time.

The first controller 310 may determine at least one of the first and second OLT PON sub-systems 252, 254 which will carry data at one or more time instances. The determination may be based on the one or more inputs and hence may be determined based on local data and/or data received from the second controller 370 of the second ONU 234.

For example, the first controller 310 may issue a first control output to the multiplexer / demultiplexer 304 via a sixth signal line 322. The first control output may control routing of data traffic to and/or from at least one of the first and second OLT PON sub-systems 252, 254.

Additionally, or alternatively, the first controller 310 may issue a second and/or third control output via the fourth and fifth signal lines 324, 326 to the first and/or second OLT PON sub-systems 252, 254 to enable and/or disable at least one of the first and second OLT PON sub-systems 252, 254.This may depend on a mode of operation, examples of which are described below.

Additionally, or alternatively, the first controller 310 may issue a fourth control output to the second controller 370 via the second signal line 314.

The second ONU 234 may comprise the first and second ONU PON sub-systems 262, 264 associated with the first and second PON technologies.

The second ONU 234 may also comprise the coexistence element 270.

A multiplexer / demultiplexer 362 may be connected at one side to a signal line 360, for carrying data traffic, and at the other side to the first and second ONU PON sub-systems 262, 264.

The second ONU 234 may comprise the second controller 370. The second controller 370 may receive one or more inputs.

For example, the second controller 370 may receive at least a sixth input, indicative of data traffic, via a seventh signal line 372.

Additionally, or alternatively, the second controller 370 may receive at least a seventh input, being the fourth control output, via the second signal line 314 from the first controller 310 of the OLT 210.

Additionally, or alternatively, the second controller 370 may receive at least an eighth input from an external source via an eighth signal line 376. Additionally, or alternatively, the second controller 370 may receive ninth and tenth inputs via ninth and tenth signal lines 384, 386. For example, the ninth and/or tenth inputs may indicate one or more faults, such as may be indicated by performance counters, status indicators, etc. and which may be received from the second ONU 234 itself, for example from at least one of the first and second ONU PON sub-systems 262, 264.

In response to the one or more inputs, the second controller 370 may perform operations to be described below.

For example, the second controller 370 may issue a fifth control output to the multiplexer / demultiplexer 362 via an eleventh signal line 382 to control routing of data traffic to and/or from at least one of the first and second ONU PON sub-systems 262, 264.

Additionally, or alternatively, the second controller 370 may issue sixth and/or seventh control outputs via the ninth and tenth signal lines 384, 386 to the first and/or second ONU PON sub-systems to enable and/or disable at least one of the first and second ONU PON sub-systems 262, 264.

Additionally, or alternatively, the second controller 370 may issue an eighth control output, equivalent to the above-mentioned second input, via the second signal line 314 to the first controller 310.

In some example embodiments, a power or battery back-up system may be connected to the at least first OLT sub-system 252 The second PON technology may, for example, be able to operate at higher speed than the first PON technology, whereas the first PON technology may be able to operate at lower power than the second PON technology. In normal operation, when mains power is available, some or all of the first to third ONUs 232, 234, 236 may communicate via the ODN 255 using the second PON technology. In the case of a power failure, the power or battery back-up system may continue to provide power to the first OLT sub-system 252. The second OLT sub-system 254 may be powered down, either automatically (due to the power failure) or controlled. When the second OLT sub-system 254 is powered down automatically, the first 310 controller may, based on detecting that the second PON technology has been powered down, determine to use the first PON technology, and cause the relevant ONU 232, 234, 236 to transmit and/or receive data using the first PON technology. In a second case, for example when the second OLT-sub system 254 is powered down in a controlled way, the power or battery back-up system may temporarily provide power to the second OLT sub-system 254 until the first controller 310 has instructed the second OLT sub-system 254 or the second ONUs 232, 234, 236attached to the second OLT sub-system 254 to deactivate on the second PON technology. The first controller 310 may additionally have means to cause the second OLT sub-system 254 to power down. Thanks to the lower power consumption of the first PON technology, and the powering down of the second OLT sub-system 254, the battery lifetime may be extended. In other words, a smaller battery or smaller auxiliary power generator is required to overcome a certain target time duration of power failure. The OLT 210 may support two PON technologies on two different ports and may comprise a coexistence element for combining the at least two PON technologies on the ODN 255 via respective ports. The first and second OLT sub-systems 252, 254 may be on different line cards or in different access nodes. The first line card or access node may comprise multiple ports of similar first PON technology, that are all protected by a power or battery back-up system. When mains power is restored, battery support may no longer be needed. When the first controller 310 detects that mains power availability is restored, the first controller 310 may cause the data to be transmitted and/or received using the second PON technology. The first controller 310 may additionally but optionally cause the first OLT sub-system 252 to power down.

In another example embodiment the ONU has a battery backup system connected to the at least first ONU sub-system 262 and that similar power saving techniques may be applied under control of the second controller 370.In another example embodiment, a splitter may be placed in-between the first OLT sub-system 252 and any such coexistence element. This enables utilizing the same first OLT sub-system 252 in combination with multiple second OLT sub-systems 254. The splitter may introduce additional loss, around 3dB for a 1:2 split or around 6dB for 1:4 split. However, the first PON technology may be a lower speed technology, or a more mature technology, for which higher budget classes are more easily achievable. For instance, when the ODN 255 has a maximum loss of 28 dB, then the second PON technology may need to support at least a so-called B+ or N1 budget class. With a 1:4 splitter between the first OLT sub-system 252 and the coexistence element, the first PON technology needs to support a higher budget class, for instance so-called D or E2 budget class (35dB maximum loss). An advantage of this example embodiment is a further increase in energy efficiency of the first OLT sub-system 252, as it is shared among more ONUs on multiple ODNs. It is further advantageous when the second PON technology is a higher speed technology, for which higher loss budgets are less easy to achieve and for which line card density is typically lower than for more mature lower speed PON technologies. This example embodiment is especially advantageous when a power or battery back-up system is required. The first controller 310 may control multiple OLTs, and may additionally power down the first OLT sub-system 252 when all ONUs of all OLTs have been instructed to use the second PON technology.

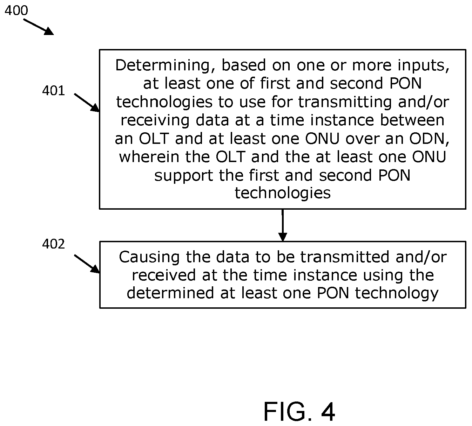

FIG. 4 is a flow diagram showing operations 400 that may be performed by one or more example embodiments. The operations 400 may be performed by hardware, software, firmware or a combination thereof. The operations 400 may be performed by one, or respective, means, a means being any suitable means such as one or more processors or controllers in combination with computer-readable instructions provided on one or more memories.

The operations 400 may, for example, be performed by a controller for an optical termination device. The controller may be comprised in at least one of the OLT 210, the at least one ONU 234, or another device in communication with the OLT and/or the at least one ONU. For example, the controller may comprise the first controller 310 which may comprise part of the OLT 210 illustrated in FIGs. 2 and 3. For example, the controller may comprise the second controller 370 which may comprise part of the second ONU 234 illustrated in FIGs. 2 and 3. For example, the controller may be external to the OLT 210 and the at least one ONU 234, for example as part of an access network controller or other network node or as an implementation in the cloud or similar.

A first operation 401 may comprise determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU supports the first and second PON technologies.

The one or more inputs may comprise at least one of the inputs mentioned above, although the list is not exhaustive.

The at least one ONU may comprise the second ONU 234 illustrated in FIGs. 2 and 3.

In some example embodiments, equivalent operations may be performed for at least one other ONU connected to the ODN 255, which operations may be performed independently of those performed for the second ONU 234.

A second operation 402 may comprise causing the data to be transmitted and/or received at the time instance using the determined at least one PON technology. This operation is in relation to the at least one ONU, for example the second ONU 234 in FIGs. 2 and 3.

The following examples may be explained in relation to operations performed by the first controller 310 of the OLT 210 illustrated in FIGs. 2 and 3. However, it should be appreciated that corresponding operations may be performed by the second controller 370 of the at least one ONU 234 or an external controller in communication with the first controller 310 and/or the second controller 370.

The data may refer to data, received via signal line 302, to be transmitted by the OLT 210 to the second ONU 234 and/or data to be received by the OLT from the second ONU. Data traffic in both downstream and upstream directions may therefore use the determined PON technology, which may be the same PON technology in each direction or, in some examples, different PON technologies in each direction.

In some example embodiments, the determined at least one PON technology may comprise only one of the first and second PON technologies (or a subset in the case of three of more PON technologies) at the time instance.

In some example embodiments, the determined at least one PON technology may comprise both of the first and second PON technologies at the time instance.

In some example embodiments, the determined at least one PON technology may change over a time period.

For example, the determined at least one PON technology may be based on a selected mode of operation, examples of which are described below. In some example embodiments, the OLT 210 and the second ONU 234 may use the same mode of operation over a time period, and in other example embodiments, the OLT and the second ONU may use different modes of operation over the time period.

In some example embodiments, the second operation 402 of causing the data to be transmitted and/or received may be achieved by the controller, for example the first controller 310 issuing the first control output to the multiplexer / demultiplexer 304 via the sixth signal line 322.

In some example embodiments, the first and second OLT PON sub-systems 252, 254 may assume either an enabled or disabled state at a time instance.

The state of the first and/or second OLT PON sub-system 252, 254 associated with the determined PON technology may be changed (if disabled) to an enabled state at, or prior to, the time instance. For example, the first controller 310 may issue the second and/or third control output via the fourth and/or fifth signal lines 324, 326 to enable (if disabled) whichever of the first and/or second OLT PON sub-system 252, 254 is associated with the determined PON technology.

In some example embodiments, a state of the first or second OLT PON sub-system 252, 254, which is other than that associated with the determined PON technology, may (if enabled) be changed from an enabled state to a disabled state. For example, the first controller 310 may issue the other of the second or third control outputs via the fourth or fifth signal lines 324, 326 to cause the other of the first and second OLT PON sub-systems 252, 254 associated with the non-determined PON technology to change its or their state to disabled. For example, if the second OLT sub-system 254 is associated with the determined PON technology, and the first OLT sub-system 252 is currently enabled, the first OLT sub-system may be disabled.

In some example embodiments, the state of the first or second OLT PON sub-system 252, 254 which is other than that associated with the determined PON technology may be disabled at, or after enabling the first or second OLT PON sub-system associated with the determined PON technology.

In some example embodiments, the state of the first or second OLT PON sub-system 252, 254 which is other than that associated with the determined PON technology may be disabled prior to enabling the first or second OLT PON sub-system associated with the determined PON technology.

In some example embodiments, the second ONU 234 may comprise the first and second ONU PON sub-systems 262, 264 described above which are respectively associated with the first and second PON technologies.

The second operation 402 of causing the data to be transmitted and/or received may comprise transmitting a control signal, in this case the fourth control output, via the second signal line 314 to the second controller 370.

The fourth control output may cause data to be received and/or transmitted by the second ONU 234 using the at least one of the first and second ONU PON sub-systems 262, 264 associated with the determined PON technology at the time instance.

For example, the second controller 370 may, responsive to receiving the fourth control output, issue a fifth control output, via the eleventh signal line 382, to cause the multiplexer / demultiplexer 362 of the second ONU 234 to receive data from or transmit data to the at least one of the first and second ONU PON sub-systems 262, 264 associated with the determined PON technology at the time instance.

In some example embodiments, the fourth control output transmitted via the second signal line 314, may cause the second controller 370 to change a state of the at least one of the first and second ONU sub-systems 262, 264 associated with the determined PON technology from a disabled state to an enabled state at, or prior to, the time instance. This may be by means of the second controller 370 issuing the sixth or seventh control outputs to the first and/or second ONU sub-systems 262, 264 associated with the determined PON technology to change its or their state to enabled.

In some example embodiments, the fourth control output transmitted via the second signal line 314 may cause the second controller 370 to change a state of the first or second ONU sub-system 262, 264, which is other than that associated with the determined PON technology, from an enabled state to a disabled state. This may be by means of the second controller 370 issuing the sixth or seventh control output to the first or second ONU sub-system 262, 264 associated with the non-determined PON technology to change its or their state to disabled.

In the disabled state, an OLT and/or ONU sub-system may be fully or partly powered-down until subsequently re-enabled, for example in response to a subsequent determination that a disabled OLT and/or ONU sub-system is associated with the determined PON technology. In this way, power consumption is reduced.

In some example embodiments, the first controller 310 may receive from the second controller 370 a further control output, for example the eighth control output, indicating that the first or second ONU sub-system 262, 264 associated with the determined PON technology has changed to the enabled state. In response, the first controller 310 may change the state of the other of the first and second OLT PON sub-systems 252, 254 associated with the non-determined PON technology to the disabled state. In some example embodiments, the first controller 310 may require other ONUs (not shown) which are connected to the ODN 255 to indicate their agreement that the particular OLT PON sub-system may be disabled, as they may currently be using, or intending to use, a particular PON technology. In some example embodiments, the first controller 310 may receive from the second controller 370 a further control output indicating that the first or second ONU sub-system 262, 264 has changed to a disabled state. In response the first controller 310 may change the state of said first or second ONU sub-system 262, 264 to the disabled state. Again, this may require other ONUs (not shown) which are connected to the ODN 255 to indicate their agreement that the particular OLT PON sub-system may be disabled, as they may currently be using, or intending to use, a particular PON technology.

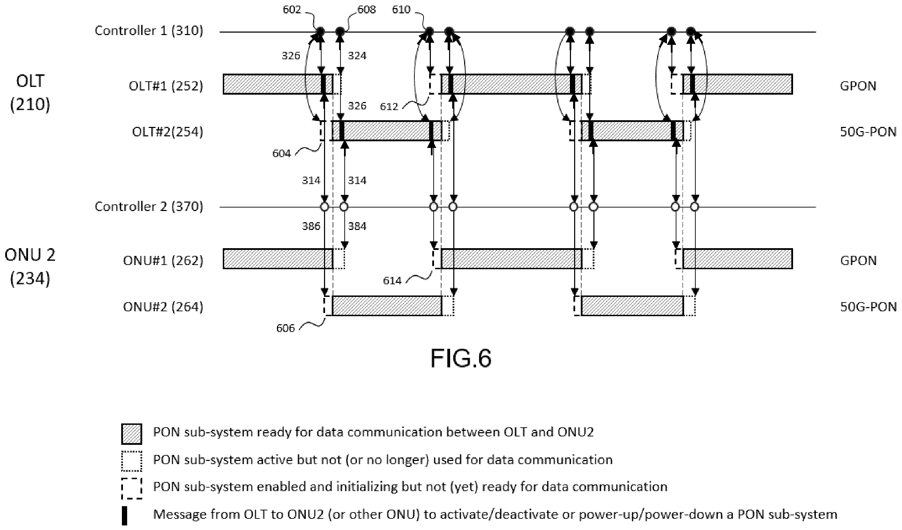

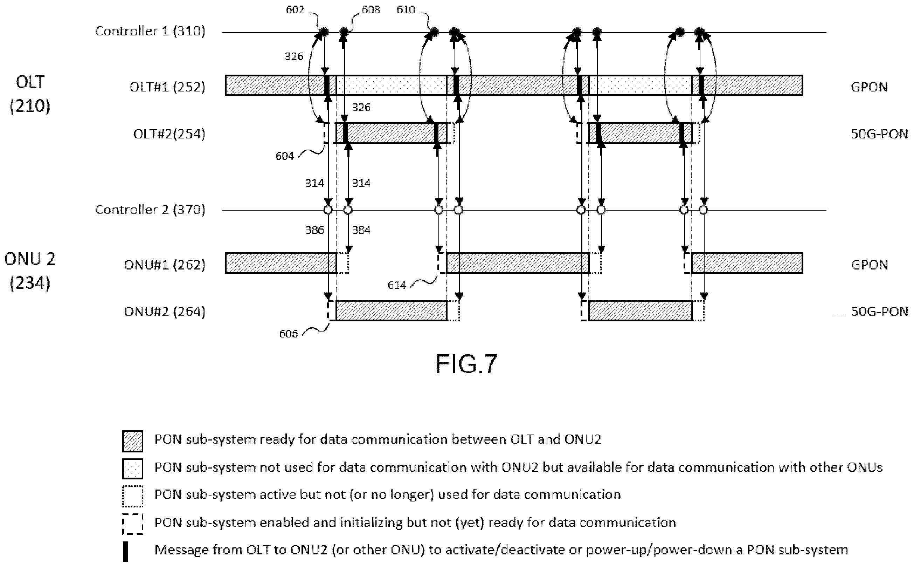

The above process may ensure that there is at least some overlap between enabling and disabling OLT and/or ONU PON sub-systems 252, 254, 262, 264 to ensure a consistent handover such that data will not be lost. Keeping both PON technologies / sub-systems active in parallel, even for a short time period, may ensure that data can be rerouted from one PON technology to the other with no packet loss. Further details of this process and associated advantages will be explained below with reference to FIGs. 6 and 7.

The above examples mainly relate to the first controller 310 determining which PON technology to use at the time instance, or over a time period. Other examples may involve the second controller 370 determining which PON technology to use at other time instances, or over different time periods, and thereafter controlling the first and/or second OLT sub-systems 252, 254 via the first controller 310. In some example embodiments, the first controller 310 may not exist and the first and second OLT sub-systems 252, 254 may always be enabled, wherein the second controller 370 may determine which of the first and/or second ONU sub-systems 252, 254 is or are to be used at one or more time instances.

Example embodiments will now be described in further detail.

In a first example, the first and second PON technologies, for example GPON and 50G-PON, are respectively associated with transmitting and/or receiving data at relatively lower and higher peak data rates.

The first controller 310 may determine which PON technology to use based on at least an indication of a data rate associated with data to be transmitted to and/or received from the second ONU 234.

For example, the indicated data rate may be based on at least one of:
- a traffic load associated with data to be transmitted by the OLT 210 to the second ONU 234 at the time instance, as indicated by the first input received via the first signal line 312;
- a traffic load associated with data to be received from the second ONU 234 at the time instance, as indicated by the second input received via the second signal line 314;
- an average traffic load associated with data that has been transmitted by the OLT (generally to all ONUs, or to the second ONU 234) prior to the time instance, as may be computed by the first controller 310; or
- an average traffic load associated with data that has been received from the second ONU 234 (or generally from all ONUs) prior to the time instance, as may be computed by the first controller 310.

Alternative determinations of indicated traffic load may be used.

For example, one or more third inputs received by the third signal line 316 from an external source may indicate to the first controller 310 that a particular traffic load will be used at the time instance, which may be a future time instance, which may be based on an estimate or prediction. For example, an eighth control input received by the eighth signal line 376 and forwarded by the second controller 370 to the first controller 310 may indicate to the first controller 310 that a particular traffic load will be used at the time instance, which may be a future time instance, which may be based on an estimate or prediction. The indicated traffic load may be indicated explicitly or implicitly, for example by indicating an application or service that will transmit data at the time instances.

For example, the first PON technology, GPON, may comprise the determined PON technology if the indicated traffic load is below a threshold.

For example, the second PON technology, 50G-PON, may comprise the determined PON technology if the indicated traffic load is at or above the threshold.

For example, in the case that the indicated traffic load is at or above the threshold, the first controller 310 may signal to the second controller 370 that data should be transmitted and/or received using the second ONU sub-system 264. The first controller 310 may also enable (if currently disabled) the second OLT sub-system 254 at, or before, the time instance, and may signal to the second controller 370 that it should enable (if currently disabled) the second ONU sub-system 264 at a time corresponding to the time instance, or beforehand. In some cases, the first controller 310 may also signal to the second controller 370 that it should disable (if currently enabled) the first ONU sub-system 262 at, or after, the time instance. If no other ONU uses the first PON technology at the time instance, the first controller 310 may also disable (if currently enabled) the first OLT sub-system 252 at, or after, the time instance.

The above-described operations may be by means of the control outputs described above in relation to FIG. 3.

The enabling and disabling of the first and second OLT PON sub-systems 252, 254 and/or the first and second ONU PON sub-systems 262, 264 may enable power savings.

In some example embodiments, the OLT 210 and each of the ONUs 232, 234, 236 may be configured to operate in one of a plurality of operating modes over a time period. The mode of operation of the OLT 210 may differ from the mode of operation of the ONUs 232, 234, 236. Different ONUs 232, 234, 236 may also operate in different modes. The modes of operation of the OLT 210 and the ONUs 232, 234, 236 may change over different time periods. The time period may comprise a plurality of time instances, including the above-mentioned time instance.

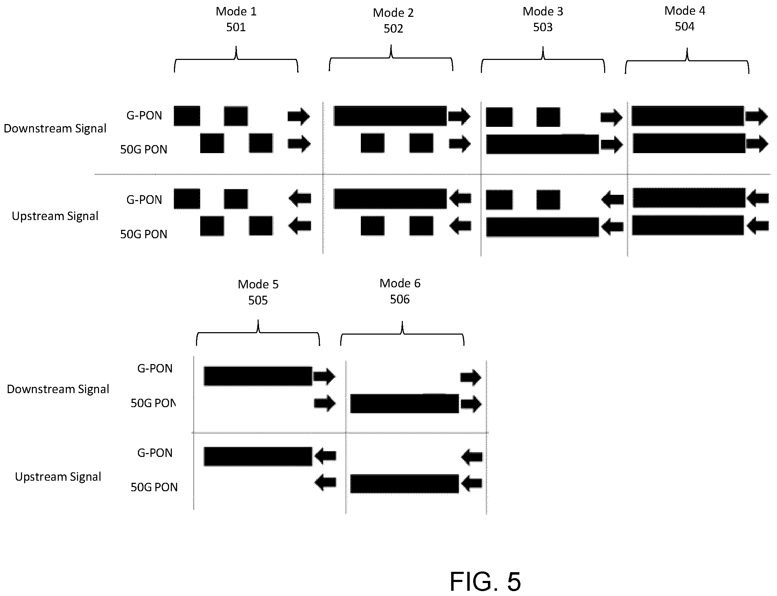

FIG. 5 graphically illustrates six example operating modes, for both downstream and upstream signals.

In a first mode 501, the determined at least one PON technology may alternate between the first and second PON technologies over the time period, meaning that only one is used at a given time instance (with the possible exception of the above-mentioned short period of parallel operation for handover). Which of the first and second PON technologies to enable or activate at different time instances may, for example, be based on indicated and/or estimated data traffic as described above.

In a second mode 502, the determined at least one PON technology comprises only the first PON technology over a plurality of spaced-apart time instances of the time period and comprises the first and second (both) PON technologies over a different plurality of spaced-apart time instances of the time period. For example, the first PON technology, being GPON in this example, may be maintained enabled or activated over the time period whereas the second PON technology, being 50G-PON, may be enabled or activated intermittently, for example in response to peak traffic demands as indicated by the one or more inputs mentioned above. A benefit of the second mode 502 is that ONUs (such as the first and third ONUs 232, 236 of FIG. 2) which support only the first PON technology, GPON, may operate without adverse impact. Also, the second ONU 234 may communicate using the first PON technology in low data traffic conditions and hence can save on power consumption.

In a third mode 503, the determined at least one PON technology comprises only the second PON technology over a plurality of spaced-apart time instances of the time period and comprises the first and second PON technologies over a different plurality of spaced-apart time instances of the time period. For example, the second PON technology, being 50G-PON in this example, may be maintained enabled or activated over the time period whereas the first PON technology, being GPON, may be selectively enabled and disabled intermittently. For example, where most or all data traffic is expected to be high-throughput traffic, the second PON technology may be used and the first PON technology (GPON) may be selectively enabled in times of congestion to handle low bandwidth, latency or jitter-sensitive data.

In a fourth mode 504, the determined at least one PON technology may comprise (both) the first and second PON technologies, enabled or activated in parallel over the time period.

In a fifth mode 505, the determined at least one PON technology may comprise only the first PON technology over the time period.

In a sixth mode 506, the determined at least one PON technology may comprise only the second PON technology over the time period.

The mode for the OLT 210 and/or the mode for the ONUs 232, 234, 236 (which may be same or different modes) may be selected by the first controller 310 and/or the second controller 370 or an external controller.

The first controller 310 and/or the second controller 370 may switch from a current operating mode to a different operating mode for successive time periods.

The OLT 210 and second ONU 234 (and also the first and third ONUs 232, 236) may use the same selected operating mode or each may operate in different selected operating modes within the time period. For example, the OLT 210 may operate in the fourth mode whilst the second ONU 234 may operate in the second mode and the first ONU 232 and third ONU 236 may operate in the fifth mode. Where multiple ONUs support the first and second PON technologies, these ONUs may operate in different modes. Additionally or alternatively, different selected operating modes may be used for upstream and downstream communications.

In some example embodiments, the mode used by the OLT 210 may comprise a superset of the mode(s) used by ONUs connected to the ODN 255, for example all attached and active ONUs connected to the ODN. For example, if a particular ONU supports the first PON technology, then the OLT 210 may need to keep the first PON technology enabled or active for as long as the particular ONU is connected and active on the ODN. For example, if another particular ONU supports only the second PON technology, then the OLT 210 may need to keep the second PON technology enabled or active for as long as the other particular ONU is connected and active on the ODN. In this scenario, the OLT 210 may select to operate in the fourth mode and a dual-PON ONU such as 234 may operate in any of the six modes.

In some example embodiments, the first controller 310 and/or the second controller 370 may determine which PON technology to use based on input indications other than, or in addition to, required or estimated data traffic in the upstream and/or downstream directions. For example, the first controller 310 may be configured to determine, via the one or more inputs, a type of data to be transmitted to, or received from, the second ONU 234. For example, the type of data may be associated with a latency-sensitive service, for example an application or service requiring low latency data communication; the first controller 310 may for example enable a second PON technology, if only one PON technology is currently enabled, and prioritize and isolate the latency-sensitive data on the enabled second PON technology. Alternatively, or additionally, applications or services with more relaxed latency requirements but higher throughputs that may potentially cause congestion might be transmitted using the first PON technology. For example, in this case the application or service with more relaxed latency requirements and higher throughputs may be transmitted over 50G-PON, as an alternative example of the first PON technology, and the latency-sensitive data may be transmitted over GPON as an alternative example of the second PON technology, as it will be appreciated that example embodiments are not limited to any particular combination of first and second PON technologies.

For example, the first controller 310 may be configured to determine or estimate, via the one or more inputs, a congestion status or risk associated with the ODN, for example based on current or past usage. If there is a high risk of congestion, the second PON technology may be enabled.

For example, the first controller 310 may be configured to determine, via the one or more inputs, a fault or error status associated with the ODN. The first controller 310 may responsively enable or use whichever one of the first and second PON technologies is more robust to faults or errors. For example, the first PON technology, if GPON, may have a higher power budget class (alternatively ODN class or link budget) or margin, than the second PON technology, if 50G-PON, and hence the first PON technology may be enabled for the duration of the fault or error.

For example, the first controller 310 may be configured to determine, via the one or more inputs, different network slices used by different applications or services. A first network slice associated with, for example, gaming, may be run over a PON technology optimized for low and/or deterministic latency and a second network slice associated with, for example, video cloud processing may be run over a PON technology optimized for high bandwidth.

FIGs. 6 and 7 illustrate timing diagrams which may be useful for understanding handover and timing aspects relating to parallel use of PON technologies.

As described above, prior to enabling and disabling (powering up and down) a particular OLT PON sub-system 252, 254, it may be advantageous to keep both OLT PON sub-systems enabled in parallel for a relatively short time period. Enabling a particular OLT PON sub-system 252, 254 and restoring communications with a corresponding ONU PON sub-system 262, 264 can take a relatively long time period (e.g., several milliseconds, for example tens or hundreds of milliseconds) because the corresponding ONU PON sub-system will need to detect a freshly-enabled signal, synchronise with it, perform frame alignment and proceed through the initialization sequence. Also, disabling a particular OLT PON sub-system 252, 254 without first informing the corresponding ONU PON sub-system 262, 264 or disabling a particular ONU PON sub-system 262, 264 without first informing the corresponding OLT PON sub-system 252, 254 may result in inefficiencies or loss of data. Therefore, some example embodiments may enable a smooth handover by keeping both PON technologies temporarily enabled or active in parallel; this may ensure that all necessary data may be routed using currently-enabled PON OLT and PON ONU sub-systems with little or no data loss. A further advantage is faster startup of the other PON ONU sub-system which may be important to increase enable/disable switching frequency of the enable/disable behaviour and reduce potential latency impact and bandwidth ramp-up time induced by the switching. As a new PON ONU sub-system is enabled, a reference frequency or clock information of the already-enabled or already active other PON ONU sub-system may be shared with the new PON ONU sub-system. This will decrease synchronisation time of the new PON ONU sub-system. Similarly, where frame boundaries are aligned between both PON technologies, the new PON ONU sub-system is aware of approximately where the start of a frame will be and hence can further speed up its activation. Protocol, management or other information for configuring or activating the new PON ONU sub-system can also be shared in advance, allowing for example skipping or shortening certain steps in the PON activation state diagram (e.g., downstream synchronisation, serial number acquisition or ranging).

There are a number of methods for an OLT to inform an ONU that an enable/disable switch of a particular PON technology is to take place at a time instance, and similarly for an ONU to inform the OLT that an enable/disable switch of a particular PON technology is to take place at a time instance. The most straightforward way may be to rely on inherent properties of an enabled, but not in operation ONU sub-system, which will be monitoring the incoming signal on the relevant downstream wavelength and will try to synchronise itself to the newly-enabled OLT sub-system. If the particular OLT sub-system becomes disabled, the corresponding ONU sub-system(s) will lose synchronisation. Hence, no dedicated messaging is necessary, but there are disadvantages. For example, unused ONU sub-systems need to remain enabled in case the corresponding OLT sub-system becomes enabled, and hence cannot be powered-down completely. Power savings are reduced.

Example embodiments may avoid or alleviate such issues, as will be described.

In the example timing diagrams of FIGs. 6 and 7, it is assumed that the determined PON technology for communication between the OLT 210 and the second ONU 234 is the same in the upstream and downstream directions.

Referring to FIG. 6, it is assumed that the first PON technology, GPON, is currently used at both the OLT 210 and the second ONU 234. The first OLT PON sub-system 252 and the first ONU PON sub-system 262 are currently enabled and the second OLT PON sub-system 254 and the second ONU PON sub-system 264 are current disabled. The first controller 310 may determine to enable the second OLT PON sub-system 254 in order to communicate using the second PON technology, 50G-PON, at one or more future time instances.

The first controller 310 may at a time instance 602 determine to enable the second PON technology, 50G-PON, for example via the fifth signal line 326 to the second OLT PON sub-system 254 and via the second signal line 314 to the second controller using the enabled first PON technology, GPON, which is a form of wake-up signal that may be transmitted specifically to the second ONU 234, or more generally to all ONUs of the PON 200.

The form of the enable signal transmitted over the second signal line 314 may be at least one of a Physical Layer Administration and Maintenance (PLOAM) message, an ONU Management Control Interface (OMCI) message or a higher-level message, e.g., using Ethernet or higher layer protocols, embedded in the GPON data.

These activation triggers enable the second OLT PON sub-system 254 and the second ONU PON sub-system 264. This may result in communication being initiated in the downstream direction using the second PON technology, 50G-PON, and in the upstream direction using the second PON technology. Reference numerals 604 and 606 indicate the timing relations following time instance 602 for the initiation of the communication in the downstream and upstream directions respectively. For ease of representation, FIG. 6 does not show the effect of propagation delays over the ODN.

After the second PON technology is fully enabled and operational, the second OLT PON sub-system 254 informs the first controller 310 (for example via the sixth signal line 326) that communications are established. The first controller 310 may instruct the multiplexer/demultiplexer 304 (via the sixth signal line 322) to forward new incoming data on the signal line 302 towards the second OLT PON sub-system 254 that transmits the data over the ODN 255 to the second ONU PON sub-system 264 using the second PON technology 50G-PON.

At a time, when all such second ONU PON sub-systems at multiple ONUs are enabled and communicating, indicated by reference numeral 608, the first controller 310 may optionally issue a disable signal to the first OLT PON sub-system 252 and to the first ONU PON sub-system 262 to inform them that they can be disabled or powered-down.

In an alternative implementation, the second ONU 234 may autonomously disable or power-down the first ONU PON sub-system 262 upon enabling the second ONU PON sub-system 264.

In an alternative implementation, the first controller 310 may instruct the ONU 234 to disable and/or power down the first ONU sub-system 262 without disabling and/or powering down its own first OLT sub-system 252.

In an alternative implementation, the first controller 310 may disable and/or power down its own first OLT sub-system 252 without instructing the ONU 234 to disable and/or power down the first ONU sub-system 262.

At a subsequent time indicated by reference numeral 610, the first controller 310 may determine to enable the first PON technology with reference numerals 612 and 614 indicating the timing relations following time instance 610 for the activation of the communication in the downstream and upstream directions respectively, using the second PON technology.

FIG. 7 is similar to FIG. 6 but illustrates the case where the OLT 210 keeps the first PON sub-system 252 active and switches between the first PON technology (first PON sub-system 252) and the second PON technology (second PON sub-system 254) for communication with the second ONU 234. In this example, the OLT 210 operates in Mode 2 while the second ONU 234 operates in Mode 1 for both the downstream and upstream direction. The OLT 210 can continue to communicate with the first ONU 232 and the third ONU 236 using the first PON technology. In this example, the first ONU 232 and the third ONU 236 operate in Mode 5 for both the downstream and upstream direction. As was also the case in FIG. 6, FIG. 7 does not show the effect of propagation delays over the ODN to simplify the representation.

Thus, using the above messaging methods, a dual PON ONU, such as the second ONU 234, may be directed to join or leave a channel which uses a particular PON technology, even if the OLT is not intending to disable or power-down the OLT PON sub-module associated with that PON technology.

In above example embodiments, certain operations have been described in relation to their performance by the first controller 310. However, as already noted, at least some operations may instead be performed by the second controller 370 or an external controller in communication with the OLT 210 and/or the at least one ONU 234 or indeed any ONU connected to the PON.

For example, the second controller 370 may cause data to be transmitted and/or received at least by the first or second PON sub-system associated with the determined at least one PON technology at the time instance. For example, the second controller 370 may change a state of the first or second ONU sub-system 262, 264 associated with the determined at least one PON technology from a disabled state to an enabled state at, or prior to, the time instance, and change a state of the other ONU sub-system from an enabled state to a disabled state, which may be prior to, at the same time as, or subsequent to the above described change to the enabled state. For example, the second controller 370 may also power-down the ONU sub-system 262, 264 having the disabled state or at least part of said sub-system having the disabled state. For example, the second controller 370 may transmit a control signal to the OLT 210 for causing the data to be received and/or transmitted by the at least first or second sub-system associated with the determined at least one PON technology at the time instance. The aforementioned inputs to the second controller 370 may comprise any of the inputs described above in relation to the first controller 310. As a particular example, the second controller 370 may autonomously determine, based on the eighth control signal received by the eighth signal line 376 indicating the particular traffic load, which of the first and second PON technologies to use at the time instance, or time instances, and therefore which of the first and/or second ONU sub-systems 264, 268 to activate at said time instances.

To summarise, by providing enabling and disabling signals or messages from the OLT 210 directed to particular ONUs 232, 234, 236 or from a particular ONU to the OLT, power savings at one or more ONUs can be maximized by omitting the need for keeping particular ONU PON sub-systems 262, 264 enabled in order to watch for OLT signals; ONU PON sub-systems 262, 264 are allowed to join or leave the PON 200, while keeping all OLT PON sub-systems 262, 264 enabled or active and OLT PON sub-systems can be disabled and enabled dependent on current needs. This mechanism also allows for power savings at OLT side.

### Example Apparatus

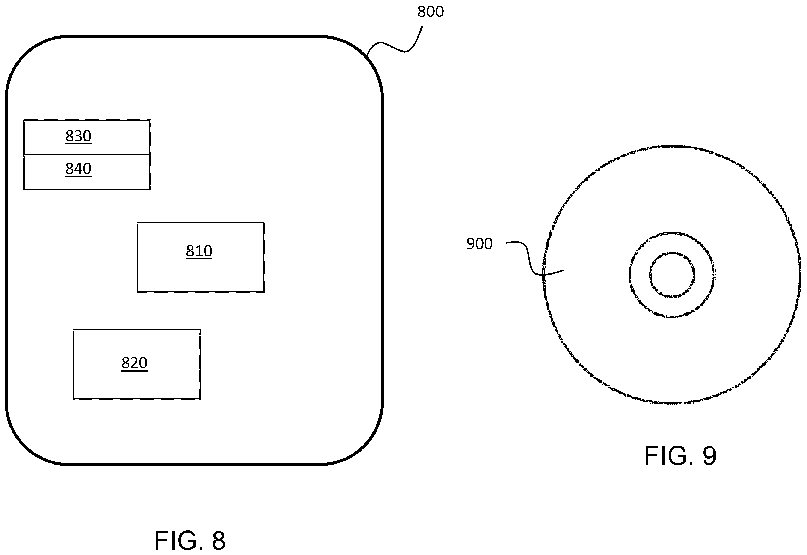

FIG. 8 illustrates an example apparatus 800 capable of supporting at least some embodiments. Illustrated is a device 800, which may be the first controller 310 or the second controller 370 of FIG. 3, or other device. Comprised in device 800 is a processor 810, which may comprise, for example, a single- or multi-core processor wherein a single-core processor comprises one processing core and a multi-core processor comprises more than one processing core. The processor 810 may comprise, in general, a control device. The processor 810 may comprise more than one processor. The processor 810 may be a control device. The processor 810 may comprise at least one Application-Specific Integrated Circuit, ASIC. The processor 810 may comprise at least one Field-Programmable Gate Array, FPGA. The processor 810 may have means for performing method steps in device 800. The processor 810 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

The device 800 may comprise a memory 820. The memory 820 may comprise random access memory and/or permanent memory. The memory 820 may comprise at least one RAM chip. The memory 820 may comprise solid-state, magnetic, optical and/or holographic memory, for example. The memory 820 may be at least in part accessible to processor 810. The memory 820 may be at least in part comprised in processor 810. The memory 820 may be means for storing information. The memory 820 may comprise computer instructions that processor 810 is configured to execute. When computer instructions configured to cause the processor 810 to perform certain actions are stored in the memory 820, and the device 800 overall is configured to run under the direction of the processor 810 using computer instructions from the memory 820, the processor 810 and/or its at least one processing core may be considered to be configured to perform said certain actions. The memory 820 may be at least in part comprised in the processor 810. The memory 820 may be at least in part external to the device 800 but accessible to the device 800.

The device 800 may comprise a transmitter 830. The device 800 may comprise a receiver 840. The transmitter 830 may comprise more than one transmitter. The receiver 840 may comprise more than one receiver.

The processor 810 may be furnished with a transmitter arranged to output information from processor 810, via electrical leads internal to the device 800, to other devices comprised in the device 800. Such a transmitter may comprise a serial bus transmitter arranged to, for example, output information via at least one electrical lead to the memory 820 for storage therein. Alternatively to a serial bus, the transmitter may comprise a parallel bus transmitter.

Likewise, the processor 810 may comprise a receiver arranged to receive information in the processor 810, via electrical leads internal to the device 800, from other devices comprised in the device 800. Such a receiver may comprise a serial bus receiver arranged to, for example, receive information via at least one electrical lead from the memory 820 for processing in the processor 810. Alternatively to a serial bus, the receiver may comprise a parallel bus receiver.

Figure 9 shows a non-transitory media 900 according to some embodiments. The non-transitory media 900 is a computer readable storage medium. It may be e.g. a CD, a DVD, a USB stick, a blue ray disk, ROM, EPROM, EEPROM, flash memory, etc. The non-transitory media 900 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

1. A controller for an optical termination device, the controller, comprising:
means for determining, based on one or more inputs, at least one of first and second passive optical network, PON, technologies to use for transmitting and/or receiving data at a time instance between an optical line terminal, OLT, and at least one optical network unit, ONU, over an optical distribution network, ODN, wherein the OLT and the at least one ONU are configured to support the first and second PON technologies; and
means for causing the data to be transmitted and/or received at the time instance using the determined at least one PON technology.

2. The controller of claim 1, wherein
the determined at least one PON technology comprises only one of the first and second PON technologies at the time instance.

3. The controller of claim 1 or claim 2, wherein
the optical termination device comprises first and second PON sub-systems respectively associated with the first and second PON technologies, and
causing the data to be transmitted and/or received comprises causing the data to be transmitted and/or received by the first and/or second PON sub-system associated with the determined at least one PON technology at the time instance.

4. The controller of claim 3, further comprising
means for changing a state of the first or second PON sub-system associated with the determined at least one PON technology from a disabled state to an enabled state at, or prior to, the time instance.

5. The controller of claim 3 or claim 4, further comprising
means for changing a state of the first or second PON sub-system, which is other than that associated with the determined at least one PON technology, from an enabled state to a disabled state.

6. The controller of claim 4 or claim 5, further comprising:
means for powering down the sub-system having the disabled state or at least part of said sub-system having the disabled state.

7. The controller of any preceding claim, wherein
the controller further comprises means for transmitting a first control signal to the OLT and/or the at least one ONU for causing the data to be received and/or transmitted by the at least first or second sub-system associated with the determined at least one PON technology at the time instance.

8. The controller of any preceding claim further comprising:
means for receiving a first input signal from the OLT or the at least one ONU indicating a state or change of state of the first or second PON sub-system.

9. The controller of any preceding claim, wherein
the one or more inputs comprise at least an indication of:
- a traffic load associated with data to be transmitted to and/or received from the at least one ONU;
- a traffic load associated with data to be transmitted by the OLT at the time instance;
- a traffic load associated with data to be received by the OLT at the time instance;
- an average traffic load associated with data that has been transmitted by the OLT prior to the time instance; or
- an average traffic load associated with data that has been received by the OLT prior to the time instance.

10. The controller of any preceding claim, wherein
the one or more inputs are received using a currently-enabled PON technology.

11. The controller of any preceding claim, wherein
the one or more inputs comprise an indication of at least one of:
- a latency requirement of data to be transmitted to and/or received from the at least one ONU;
- a congestion status associated with the ODN; or
- a fault status associated with the ODN.

12. The controller of any preceding claim, when not dependent on claim 2, wherein
the one or more inputs comprise, at least in part, an indication that data to be transmitted to and/or received from the at least one ONU comprises first and second data traffic streams, and
the determining means determines to use, at the time instance:
the first PON technology for transmitting and/or receiving the first data traffic stream, and
the second PON technology for transmitting and/or receiving the second data traffic stream.

13. The controller of claim 3 or any claim dependent thereon, wherein
the one or more inputs comprise an indication of a power supply condition for the OLT and/or the at least one ONU.

14. The controller of any preceding claim, comprised in at least one of:
- the OLT;
- the at least one ONU; or
- a device in communication with the OLT and/or the at least one ONU.

15. A method, comprising:
determining, based on one or more inputs, at least one of first and second passive optical network, PON, technologies to use for transmitting and/or receiving data at a time instance between an Optical Line Terminal, OLT, and at least one optical network unit, ONU, over an optical distribution network, ODN, wherein the OLT and the at least one ONU are configured to support the first and second PON technologies; and
causing the data to be transmitted and/or received at the time instance using the determined at least one PON technology.
